(19) Europäisches Patentamt
European Patent Office
Office européen des brevets

(11) **EP 2 161 066 B1**

(12) **EUROPEAN PATENT SPECIFICATION**

(45) Date of publication and mention
of the grant of the patent:
**22.07.2015 Bulletin 2015/30**

(21) Application number: **09168265.8**

(22) Date of filing: **20.08.2009**

(51) Int Cl.:
*B29K 105/16* (2006.01)    *B01D 46/00* (2006.01)
*B01D 46/52* (2006.01)    *B01D 46/54* (2006.01)
*B01D 63/06* (2006.01)    *B01D 63/10* (2006.01)
*B01D 69/02* (2006.01)    *B01D 71/06* (2006.01)
*B01D 39/16* (2006.01)    *B29L 31/14* (2006.01)
*B29C 53/24* (2006.01)    *D04H 13/00* (2006.01)
*D01D 5/00* (2006.01)    *B01D 69/10* (2006.01)

(54) **Method of manufacturing composite filter media**

Verfahren zur Herstellung von Verbundstofffiltermedien

Procédé de fabrication d'un matériau filtrant composite

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.08.2008 US 201543**

(43) Date of publication of application:
**10.03.2010 Bulletin 2010/10**

(73) Proprietor: **BHA Altair, LLC**
**Franklin, TN 37067 (US)**

(72) Inventors:
• **Smithies, Alan**
**Overland Park, KS 66213 (US)**
• **Clements, Jack T.**
**Lee's Summit, MO 64064 (US)**
• **Mei, Jason**
**Overland Park, KS 66211 (US)**

(74) Representative: **Pronovem**
**Office Van Malderen**
**Avenue Josse Goffin 158**
**1082 Bruxelles (BE)**

(56) References cited:
EP-A- 1 970 111    US-A1- 2006 137 317
US-A1- 2008 113 573    US-A1- 2008 314 010
US-A1- 2008 315 464

**Description**

The field of the invention relates generally to a composite nonwoven filter media, and more particularly, to a corrugated or embossed composite nonwoven filter media.

Some known filter media composite constructs incorporate a wet-laid paper making process to produce the substrate, and an electro-spun technology to deposit a lightweight nanofiber coating on one or both sides of the filter media substrate. Typically the media substrate has a basis weight of 100-120 grams per square meter (g/m$^2$), and the nanofiber layer has a basis weight of 0.5 g/m$^2$ or less.

US 2006/0137317 discloses a filtration medium for use in air filters which contains a nanofiber layer and a carrier. The nanofiber layer is formed by electrostatic spinning or electroblowing on the carrier. The carrier is a spunbond nonwoven layer. US 2008/0113573 discloses a nonwoven porous support comprising sheath-core bicomponent melt spun fibers or PP spunbond-PP meltblown-PP punbond laminates. A nanofiber porous support is described to be incorporated into a layered structure comprising one or more porous supports and one or more layers of nanofiber.

It is known that the lightweight nanofiber layer is vulnerable to damage in high mechanical stress applications, especially because the nanofiber layer is formed from fibers with diameters less than 500 nanometer (nm), and more typically, 100 nm. It is known that there are "shedding" problems where the nanofibers are shed from the filter media because of relatively weak attraction bonds between the nanofibers and the base media for conventional electro-spun fibers that rely on polarity attraction forces. Also, known electro-spun nanofiber layers are two dimensional in structure or a single fiber layer in thickness, and when the nanofiber layer cracks or breaks, dust can readily penetrate the base media substrate After the nanofiber layer is damaged, dust is permitted to penetrate the base media and contribute to a rise in the operating pressure drop of the filter. Further, known media substrates also have mechanical stress limitations and are prone to deformation under high dust loading. These known filter media composite constructs when used to filter inlet air of power generation gas turbines can permit fine dust particulates to penetrate the filter over the operating life of the filter. Typically, this known filter media type will have a new or clean operating efficiency providing for around 55% of capture of 0.4 $\mu$m particles, at a pressure drop typically greater than 7.0 mm H$_2$O, when tested in accordance with the ASHRAE 52.2-1999 test procedure at the known operating flow rate. It is known that as much as 6.8 to 9 kg (15 to 20 pounds) of dust can penetrate known filter media over a 24,000 hour operating life because of this low initial efficiency. Exposing the turbine compressor blades to dust over an extended time can cause serious and catastrophic fouling and erosion of the turbine blades. The current procedure of cleaning the turbine blades requires taking the turbine off-line at periodic intervals to water wash the blades clean. Turbine down time is expensive because the turbine is not operating and therefore, power generation is curtailed. It would be desirable to provide a higher efficiency filter media than the known filter media to reduce or eliminate turbine down time to clean the turbine blades and/or the replacement of damaged blades.

In one aspect according to the present invention, a method of making a composite filter media is provided. The method includes forming a nonwoven fabric substrate that includes a plurality of bicomponent synthetic fibers by a spunbond process, calendering the nonwoven fabric substrate with embossing calender rolls to form a bond area pattern having a plurality of substantially parallel discontinuous lines of bond area to bond the synthetic bicomponent fibers together to form a nonwoven fabric. The bond area of the bicomponent fibers is about 10% to about 14% of an area of the nonwoven fabric. The nonwoven fabric having a minimum filtration efficiency of about 50%, measured in accordance with ASHRAE 52.2-1999 test procedure. The method also includes applying a nanofiber layer by electro-blown spinning a polymer solution to form a plurality of nanofibers on at least one side of the nonwoven fabric to form the composite filter media. The composite filter media having a filtration efficiency of at least about 75%, measured in accordance with ASHRAE 52.2-1999 test procedure. The method further includes corrugating the composite filter media using opposing corrugating rollers at a temperature of about 90°C to about 140°C.

In another aspect, a method of making a composite filter media is provided. The method includes forming a nonwoven fabric substrate that includes a plurality of bicomponent synthetic fibers by a spunbond process, calendering the nonwoven fabric substrate with embossing calender rolls to form a bond area pattern having a plurality of substantially parallel discontinuous lines of bond area to bond the synthetic bicomponent fibers together to form a nonwoven fabric. The nonwoven fabric has a minimum filtration efficiency of about 50%, measured in accordance with ASHRAE 52.2-1999 test procedure. The method also includes applying a nanofiber layer by electro-blown spinning a polymer solution to form a plurality of nanofibers on at least one side of the nonwoven fabric to form the composite filter media. The composite filter media having a filtration efficiency of at least about 75%, measured in accordance with ASHRAE 52.2-1999 test procedure. The method further includes embossing the composite filter media with an embossing pattern using opposing embossing rollers at a temperature of about 90°C to about 140°C.

Various aspects and embodiments of the present invention will now be described in connection with the accompanying drawings, in which:

FIG. 1 is cross sectional illustration of an exemplary aspect of a composite filter media.

FIG. 2 is a photomicrograph of bicomponent fibers used in the filter media shown in FIG. 1.

FIG. 3 is a photomicrograph of the base media substrate shown in FIG. 1.

FIG. 4 is a top illustration of the bond pattern of the base media substrate shown in Fig. 1.

FIG. 5 is cross sectional illustration of an exemplary aspect of the composite filter media shown in FIG. 1 after corrugating.

FIG. 6 is a cross sectional illustration of corrugation rollers in accordance with an exemplary aspect.

FIG. 7 is a side illustration of a filter cartridge that includes the filter media shown in FIG. 4.

FIG. 8 is an enlarged perspective illustration of a portion of the filter cartridge shown in FIG. 7.

FIG. 9 is a perspective illustration of a filter assembly that includes the filter cartridge shown in FIG. 7.

FIG. 10 is a schematic illustration of embossing rollers in accordance with an exemplary aspect.

FIG. 11 is a graph of fractional efficiency versus particle size of base media substrates at various basis weights in accordance with an exemplary aspect.

FIG. 12 is a graph of fractional efficiency versus particle size of base media substrates with and without a nonfiber layer in accordance with an exemplary aspect compared to a comparative base media substrate with and without a nanofiber layer.

FIG. 13 is a bar graph of pressure drop versus base media substrate with and without a nonfiber layer in accordance with an exemplary aspect compared to a comparative base media substrate with and without a nanofiber layer.

FIG. 14 is a graph of differential pressure versus hours of base media substrate with a nonfiber layer in accordance with an exemplary aspect compared to a comparative base media substrate with a nanofiber layer.

A composite filter media for filter assemblies and a method of making the composite filter media is described in detail below. The composite filter media includes a media substrate of a synthetic nonwoven fabric that is formed from bicomponent fibers by a unique spunbond process. A nanofiber layer is deposited on at least one side of the media substrate by an electro blowing process. The composite filter media is corrugated or embossed to provide efficient separation of pleats which provides large passageways for low restriction air flow on both the "clean" and "dirty" sides of the composite filter media. The composite media provides an initial filtration efficiency of about 75% retained capture of 0.4 $\mu$m particles, when tested in accordance with the American Society of Heating, Refrigerating and Air-Conditioning Engineers (ASHRAE) 52.2-1999 test procedure, which is about a 20% increase in performance compared to known filter media. In addition, the composite media provides the 75% efficiency at a greater than 30% lower pressure drop than known filter media. The composite filter media has a quality factor ($Q_f$) of greater than about 450, and in another embodiment, greater than about 500. Also, the composite filter media has a resistance (or pressure drop) of less than 4.0 mm water, measured in accordance with EN-1822 (1998), with the base media substrate having a resistance of less than about 2.5 mm water, measured in accordance with EN-1822 (1998).

Further, the composite filter media is more durable than known filter media and provides for lower pressure drop build-up because of less deflection of the filter media from the forces exerted on the filter media during the filtering and reverse cleaning operations. Also, the spunbond corrugated media substrate is more efficient than known filter media substrates at an equivalent or lower pressure drop. The bicomponent fibers used to form the media substrate are finer than fibers used to form known filter media. Further, the nanofiber membrane layer has a higher basis weight than known filter media which permits the filter media to clean down more effectively under reverse pulse cleaning than known filter media. The high basis weight of the nanofiber layer provides for a durable three dimensional surface filtration layer which has an extensive tortuous path that permits high efficiency and fine particle capture without substantially restricting air flow or increasing pressure drop. In addition, the adherence bond between the base media substrate and the nanofiber layer is improved due additional thermal processing during the corrugating or embossing operation.

By "quality factor ($Q_f$) " is meant the parameter defined by the equation:

$$Q_f = -25000 \cdot \log(P/100)/\Delta p$$

Where "P" = particle penetration in % of filter media thickness, and "$\Delta p$" = pressure drop across the media in Pascals.

By "resistance" is meant the resistance (pressure drop) as measured using the test method described in EN 1822 (1998).

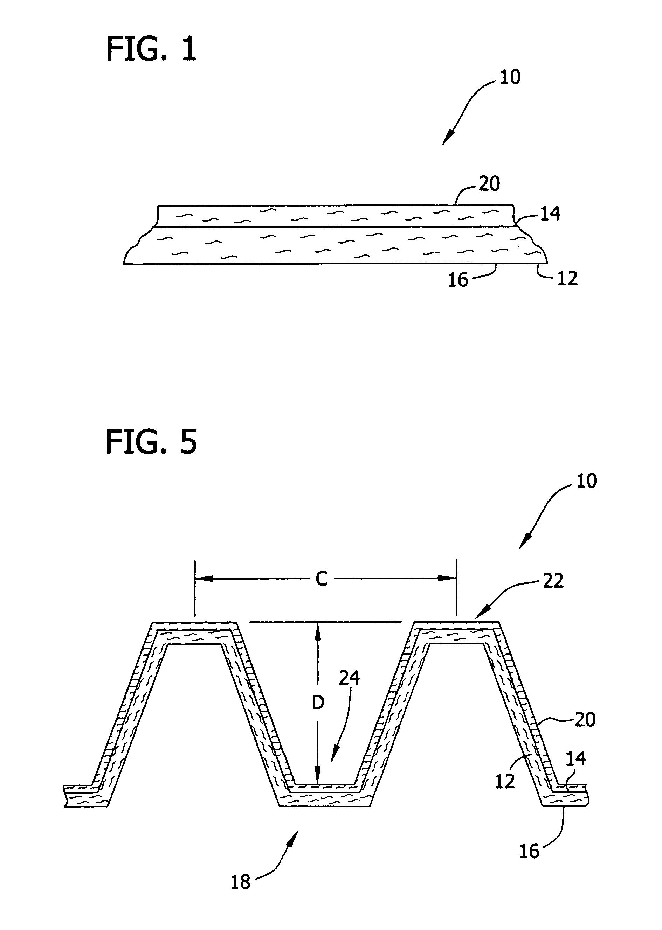

Referring to the drawings, FIG. 1 is a sectional illustration of an exemplary aspect of a composite filter media 10. Filter media 10 includes a base media substrate 12 having a first side 14 and a second side 16. In one aspect, a nanofiber layer 20 is deposited onto first side 14 of media substrate 12. In another aspect, nanofiber layer 20 is deposited onto second side 16, and in another aspect, nanofiber layer 20 is deposited on each of first and second sides 14 and 16. In still another aspect, base media substrate 12 does not include a nanofiber layer. In another exemplary aspect, a plurality of corrugations 18 (shown in FIG. 5) are formed in filter media 10.

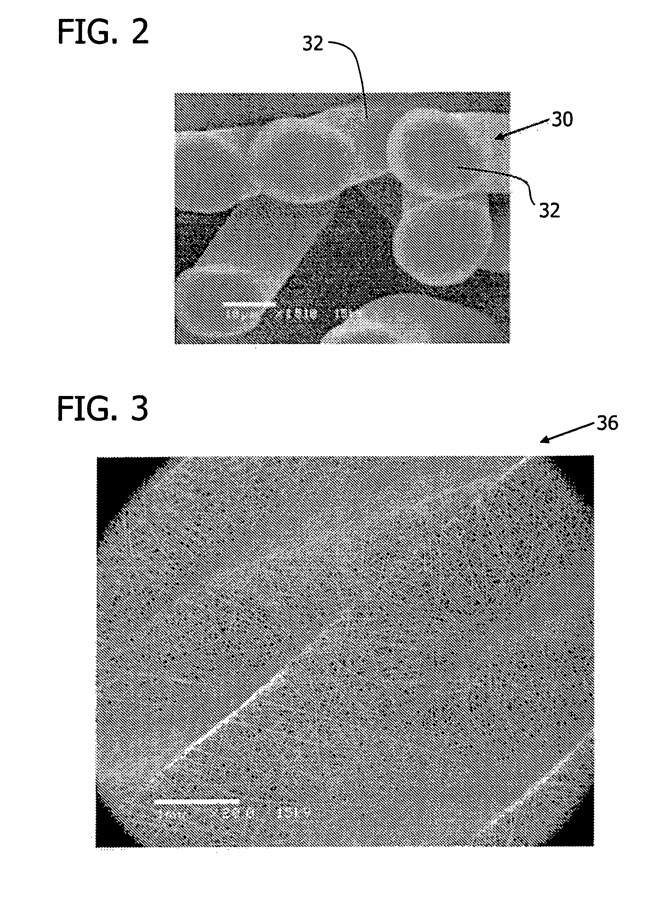

Media substrate 12 is a nonwoven fabric formed from synthetic bicomponent fibers using a spunbond process. Suitable bicomponent fibers are fibers having a core-sheath structure, an island structure or a side-by-side structure. Referring also to FIG. 2, in the exemplary embodiment, a bicomponent fiber 30 includes a core 32 and a sheath 34 circumferentially surrounding core 32. Bicomponent fibers 30 are meltspun through jets into a plurality of continuous fibers which are uniformly deposited into a random three dimensional web. The web is then heated and embossed calendered which thermally bonds the web into a consolidated spunbond fabric 36, shown in FIG. 3. Heat from contact of the calender roll embossing pattern softens or melts the thermoplastic sheath 34 of bicomponent fibers 30 which binds the nonwoven fibers together only at the contact points of calender roll embossing pattern. The temperature is selected so that at least softening or fusing of the lower melting point sheath 34 portion of bicomponent fibers 30 occurs. In one embodiment, the temperature is about 90°C to about 240°C. The desired connection of the fibers is caused by the melting and re-solidification of sheath portion 34 after cooling.

Bicomponent fibers 30 have diameter of about 12 microns to about 18 microns which is finer than the known fibers used in traditional and common spunbond products. A unique aspect of base media substrate 12 is the bond pattern used to consolidate spunbond base media 12. The bond pattern is defined by the embossing pattern of the calender rolls. The bond area of the spunbond bicomponent fibers in media 12 is about 10 percent to about 14 percent of the total area of the fabric as compared to the bond area of about 29 to 24 percent of traditional spunbond media used in filtration. The bond area provides for media durability and function while at the same time the bond points create areas of fused polymer that have zero air flow.

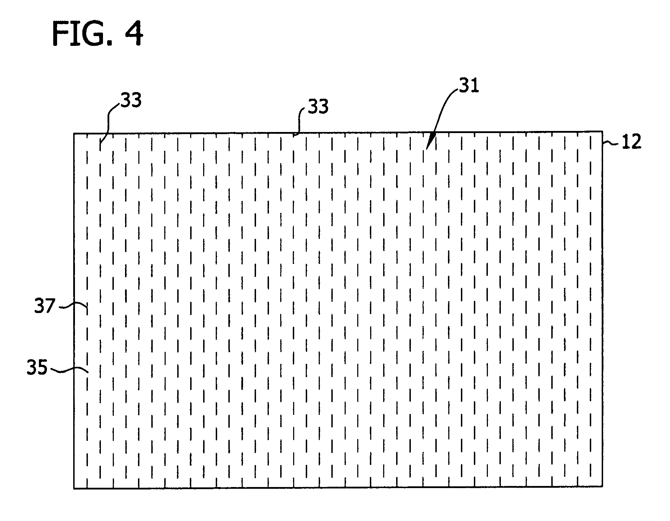

Referring also to FIG.4, a bond pattern 31 on base media 12 attains an acceptable durability to base media 12, while allowing more fiber to be available for filtration thus increasing filtration efficiency. Bond pattern 31 includes a plurality of parallel discontinuous lines 33 of bond area extending across base media 12 and in a direction parallel to the machine direction (longitudinal extent) of base media 12. The parallel discontinuous lines 33 of bond area are off-set from each other so that at a location of no bond area 35 in a discontinuous line 33 is aligned with a bond area 37 of an adjacent discontinuous line 33. The bond area 37 of spunbond bicomponent fibers 30 in media 12 is about 10 percent to about 14 percent of the total area of the fabric as compared to the bond area of about 19 to 24 percent of known spunbond fabrics. The lower bond areas allow for base media 12 to have increase air permeability or inversely low pressure drop when tested at a given air flow. In the exemplary embodiment the basis weight of base media 12 is about 100 g/m$^2$ to about 330 g/m$^2$, in another embodiment, about 100 g/m$^2$ to about 220 g/m$^2$.

Any suitable synthetic bicomponent fiber 30 can be used to make the nonwoven fabric of media substrate 12. Suitable materials for core 32 and sheath 34 of bicomponent fiber 30 include, but are not limited to, polyester, polyamid, polyolefin, thermoplastic polyurethane, polyetherimide, polyphenyl ether, polyphenylene sulfide, polysulfone, aramid, and mixtures thereof. Suitable materials for the sheath of the bicomponent fiber include thermoplastic materials that have a lower melting point than the material of the core of the bi-component fiber, for example polyester, polyamid, polyolefin, thermoplastic polyurethane, polyetherimide, polyphenyl ether, polyphenylene sulfide, polysulfone, aramid, and mixtures thereof.

Nanofiber layer 20 is formed by an electro-blown spinning process that includes feeding a polymer solution into a spinning nozzle, applying a high voltage to the spinning nozzle, and discharging the polymer solution through the spinning nozzle while injecting compressed into the lower end of the spinning nozzle. The applied high voltage ranges from about 1 kV to about 300 kV. The electro-blown spinning process of forming nanofibers and the unique apparatus used is described in detail in U.S. Patent Application Publication No. 2005/0067732. The electro-blown spinning process provides a durable three dimensional filtration layer of nanofibers that is thicker than known nanofiber filtration layers on known filter media. In the exemplary aspect the basis weight of nanofiber membrane layer 20 is about 0.6 g/m$^2$ to about 20 g/m$^2$, in another aspect, about 5 g/m$^2$ to about 10 g/m$^2$. The nanofibers in nanofiber layer 20 have an average diameter of about 500 nm or less.

Media substrate 12 has a high air permeability compared to known filter media which permits improved mechanical adhesion of the nanofibers to media substrate 12, as described below. As nanofiber layer 20 is applied to first side 14 of media substrate 12, a vacuum may be applied from second side 16 of media substrate during the electro-blown spinning process to hold the nanofibers on the substrate. In combination with the drying temperatures used in the application of nanofiber layer 12, softening of sheath portion 34 of bicomponent fiber 30 occurs and nanofiber layer 20 is further densified and bonded to spunbond base media substrate 12. In combination with the high air permeability of media substrate 12, the effectiveness of the vacuum becomes more effective which provides for a strong mechanical bond of the nanofibers to the bicomponent fibers of media substrate 12.

Suitable polymers for forming nanofibers by the electro-blown spinning process are not restricted to thermoplastic polymers, and may include thermosetting polymers. Suitable polymers include, but are not limited to, polyimides, polyamides (nylon), polyaramides, polybenzimidazoles, polyetherimides, polyacrylonitriles, polyethylene terephthalate, polypropylene, polyanilines, polyethylene oxides, polyethylene naphthalates, polybutylene terephthalate, styrene butadiene rubber, polystyrene, polyvinyl chloride, polyvinyl alcohol, polyvinylidene chloride, polyvinyl butylene and copolymer or derivative compounds thereof. The polymer solution is prepared by selecting a solvent that dissolves the selected polymers. The polymer solution can be mixed with additives, for example, plasticizers, ultraviolet ray stabilizers, crosslink agents, curing agents, reaction initiators, and the like. Although dissolving the polymers may not require any specific temperature ranges, heating may be needed for assisting the dissolution reaction.

It can be advantageous to add plasticizers to the various polymers described above, in order to reduce the Tg of the fiber polymer. Suitable plasticizers will depend upon the polymer, as well as upon the particular end use of the nanofiber layer. For example, nylon polymers can be plasticized with water or even residual solvent remaining from the electrospinning or electro-blown spinning process. Other plasticizers which can be useful in lowering polymer $T_g$ include, but are not limited to, aliphatic glycols, aromatic sulphanomides, phthalate esters, including but not limited to, dibutyl phthalate, dihexl phthalate, dicyclohexyl phthalate, dioctyl phthalate, diisodecyl phthalate, diundecyl phthalate, didodecanyl phthalate, and diphenyl phthalate, and the like.

Referring also to FIG. 5, in the exemplary aspect, corrugations 18 are formed as an alternating up and down substantially V-shaped wave in composite filter media 10. Wave crests 22 and troughs 24 extend in the direction of travel of the web of substrate through the forming equipment. Troughs 24 have an effective depth D of at least about 0.5 mm (0.02 inch) to permit breathability of filter media 10 at high dust loading to maintain low differential pressure, below about 4 inches water column (wc). A corrugation pitch C in the exemplary aspect is about about 1.2 to about 3.9 corrugations per cm (3 to about 10 corrugations per inch), and in another aspect, from about 1.2 to about 2.4 corrugations per cm (3 to about 6 corrugations per inch). The combination of effective depth D and corrugation pitch C permit optimization of touch points which prevents pleat collapse under high static pressure from high air velocities and dust loadings.

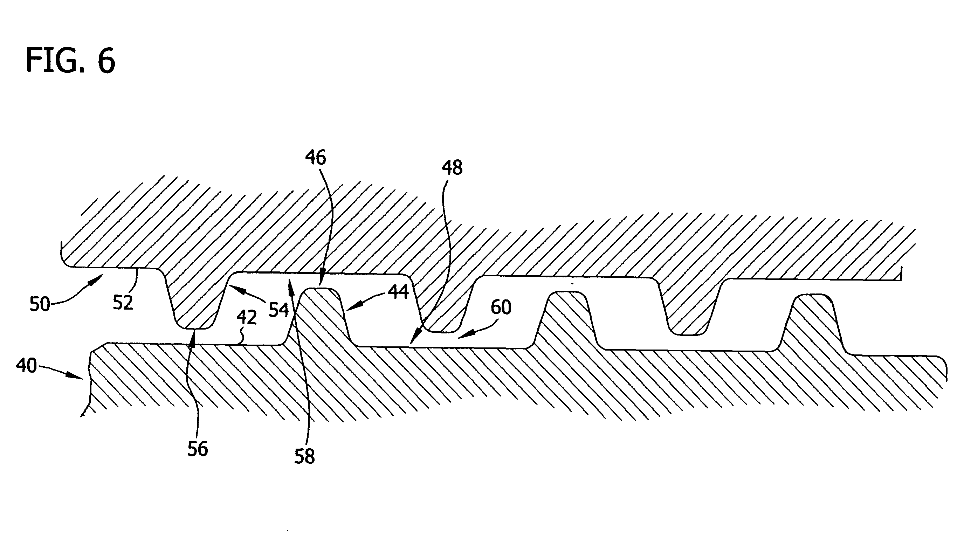

Referring also to FIG. 6, opposing profiled corrugating rolls produce a uniform corrugation over the entire cross-section of filter media 10. A lower corrugating roller 40 includes an outer surface 42 having a plurality of substantially V shaped ribs 44 extending circumferentially around lower roller 40. Ribs 44 are substantially evenly spaced apart along the width of outer surface 42 of lower roller 40 so that outer surface 42 has a plurality of peaks 46 and valleys 48. An upper corrugating roller 50 includes an outer surface 52 having a plurality of substantially V shaped ribs 54 extending circumferentially around upper roller 50. Ribs 54 are substantially evenly spaced apart along the width of outer surface 52 of upper roller 50 so that outer surface 52 has a plurality of peaks 56 and valleys 58. Ribs 44 of lower roller 40 are aligned with valleys 58 of upper roller 50 and ribs 54 of upper roller 50 are aligned with valleys 48 of lower roller 40. The width of ribs 44 and 54 can be any suitable width up to the width of opposing valleys 48 and 58 of lower and upper rollers 40 and 50. A space 60 between ribs 44 and 54 and valleys 48 and 58 respectively define a nip between lower and upper rollers 40 and 50. The nip is less than the thickness of filter media 10 which consolidates filter media 10 when passed between ribs 44 and 54 and respective valleys 48 and 58. The consolidation of filter media 10 at the nip sets corrugations 18 into filter media 10. In operation, the temperature of corrugating rollers 40 and 50 is about 90°C to about 140°C.

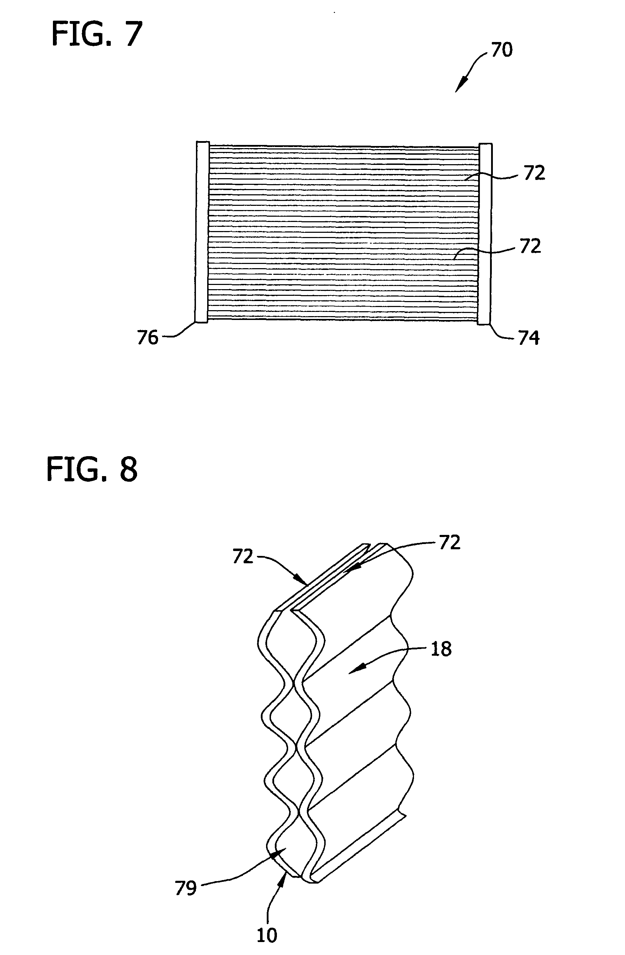

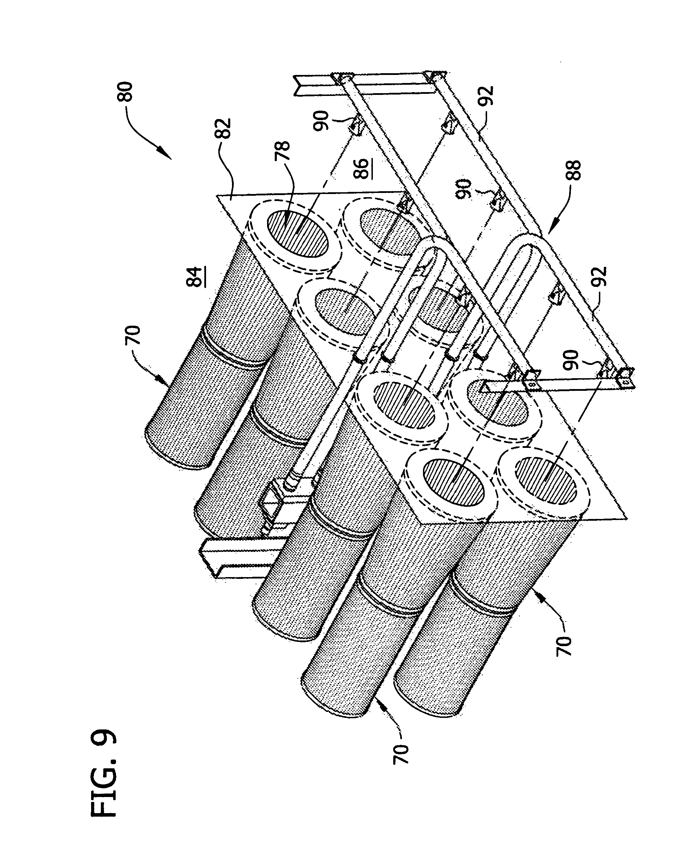

FIG. 7 is a side illustration of a filter element 70 formed from filter media 10. In the exemplary aspect, filter media 10 includes a plurality of pleats 72 arranged so that corrugations 18 act as spacers between pleats 72. Filter element 70 includes a first end cap 74 and an opposing second end cap 76 with filter media 10 extending between end caps 74 and 76. Filter element 70 has a tubular shape with an interior conduit 78 (shown in FIG. 9). Filter element 70 is cylindrical in shape, but can also be conical as shown in FIG. 9. Filter element 70 can also include an inner and/or an outer support liner to provide structural integrity of filter element 70 and/or support for filter media 10. As shown in FIG. 8, corrugations 18 in adjacent pleats 72 of filter element 70 define oval tubes 79 which permit filtered air to flow through filter element 70. In the exemplary embodiment, corrugations 18 extend substantially perpendicular to the edges of pleats 72.

FIG. 9 is a perspective illustration of a filter assembly 80 that includes a plurality of filter elements 70 mounted to a tube sheet 82 in pairs in an end to end relationship. Tube sheet 82 separates the dirty air side 84 from the clean air side 86 of filter assembly 80. A cleaning system 88 for cleaning filter elements 70 with pulsed air includes a plurality of air nozzles 90 mounted to air supply pipes 92. Pulses of compressed air directed into interior conduit 78 of filter elements 70 are used to clean filter elements 70 of collected dirt and dust.

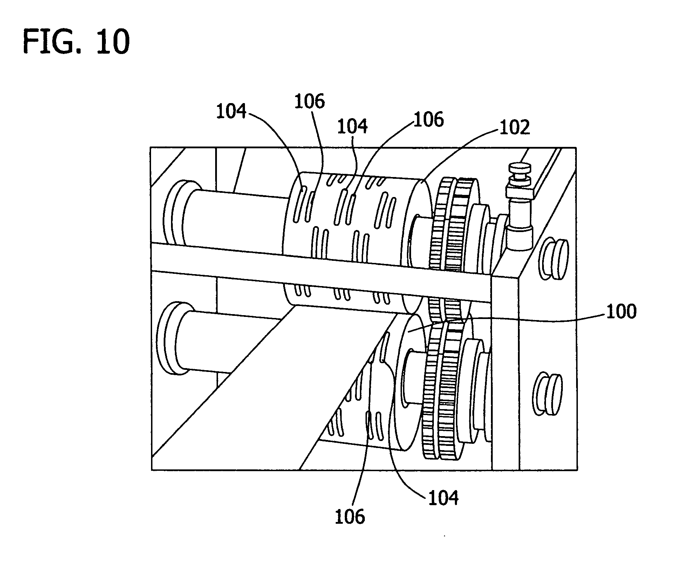

In another exemplary aspect, filter media 10 is embossed using opposed embossing rolls. FIG. 10 is a schematic illustration of a lower embossing roller 100 and an upper embossing roller 102. A plurality of pairs of a rib 104 and a channel 106 are located in an outer surface 108 of lower and upper embossing rollers 100 and 102. Each rib 104 and each channel 106 extend along a portion of the circumference of embossing roller 100 or 102. Also, each pair of a rib 104 and a channel 106 on lower embossing roller 100 is aligned with a corresponding pair of a rib 104 and a channel 106 on upper embossing roller 102 with the ribs and channels arranged so that each rib 104 on lower roller 100 is aligned with and mates with a channel 106 on upper roller 102, and each rib 104 on upper roller 102 is aligned with and mates with a channel 106 on lower roller 102. The plurality of pairs of ribs 104 and channels 106 are spaced apart across embossing rollers 100 and 102 in staggered rows which define an embossing pattern.

Composite filter media 10 is made by forming nonwoven fabric base substrate 12 using a plurality of bicomponent synthetic fibers 30 with a spunbond process. Base substrate 12 is then calendered with embossing calender rolls to form a bond area pattern 31 having a plurality of substantially parallel discontinuous lines 33 of bond area to bond synthetic bicomponent fibers 30 together to form nonwoven fabric base substrate 12. The formed substrate 12 has a filtration efficiency of at least about 50%, measured in accordance with ASHRAE 52.2-1999 test procedure. A nanofiber layer 20 is applied by electro-blown spinning a polymer solution to form a plurality of nanofibers on at least one side of base substrate 12 to form composite filter media 10. The resultant composite filter media has a filtration efficiency of at least about 75%, measured in accordance with ASHRAE 52.2-1999 test procedure. Composite filter media 10 is then corrugated using opposing corrugating rollers 40 and 50 at a temperature of about 90°C to about 140°C. In an alternate embodiment, composite filter media 10 is embossed using opposing embossing rollers 100 and 102 at a temperature of about 90°C to about 140°C.

Aspects of the invention will be further described by reference to the following examples which are presented for the purpose of illustration only and are not intended to limit the scope of the invention.

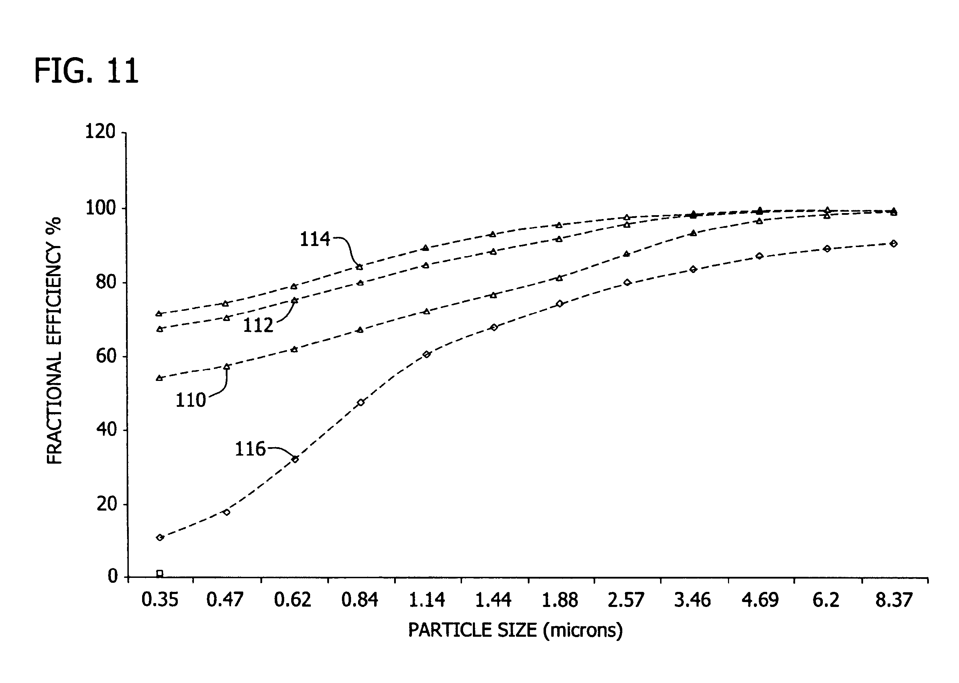

Flat sheets of base media substrate 12 test samples having various basis weights were compared to a comparative base media substrate in a flat sheet fractional efficiency test in accordance ASHRAE 52.2-1999 test method. Air containing KCl particles was directed through each test sample at a flow rate of about 10 ft/min. FIG. 11 shows a graphical representation of the comparison test. Line 110 represents base substrate 12 at a basis weight of 150g/m$^2$, line 112 represents base substrate 12 at a basis weight of 200g/m$^2$, and line 114 represents base substrate 12 at a basis weight of 260g/m$^2$. Line 116 represents a comparative base media substrate. The base media substrates did not include a nanofiber layer. Base media substrate 12 at each basis weight has a higher efficiency than the comparative base substrate over the entire range of particle sizes of the KCl particles.

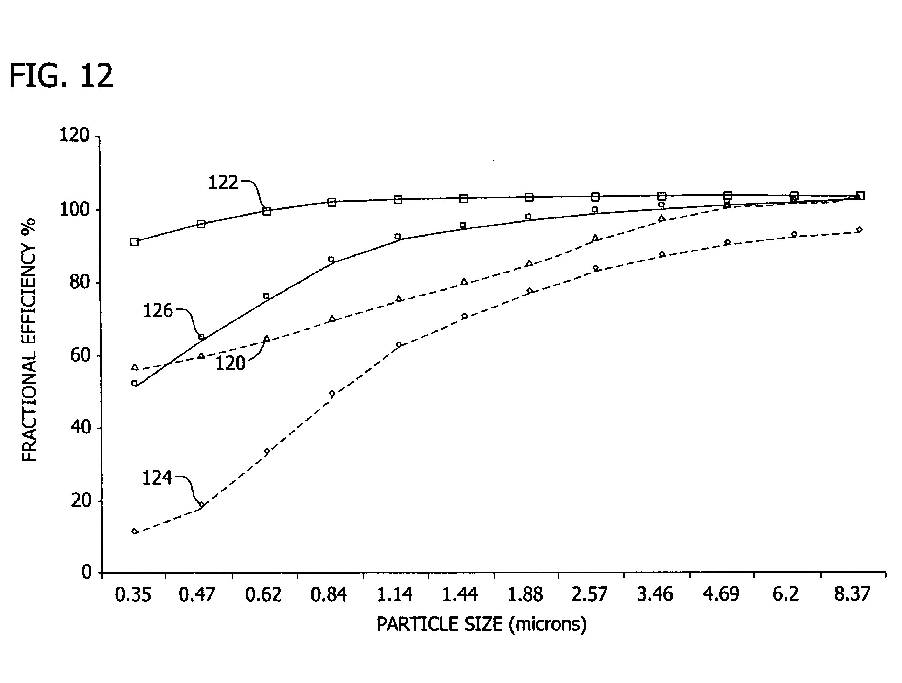

Flat sheets of base media substrate 12, and base media substrate 12 including nanofiber layer 20 were compared to a comparative base media substrate with and without a nanofiber layer in a flat sheet fractional efficiency test in accordance ASHRAE 52.2-1999 test method. Air containing KCl particles was directed through each test sample at a flow rate of about 10 ft/min. FIG. 12 shows a graphical representation of the comparison test. Line 120 represents base media substrate 12 at 150g/m$^2$, and line 122 represents base media substrate 12 at 150g/m$^2$, including nanofiber layer 20. Line 124 represents a comparative base media substrate and line 126 represents the comparative base media substrate including a nanofiber layer. Base media substrate 12 with and without nanofiber layer 20 had a higher efficiency than the comparative base substrate with and without a nanofiber layer over the entire range of particle sizes of the KCl particles.

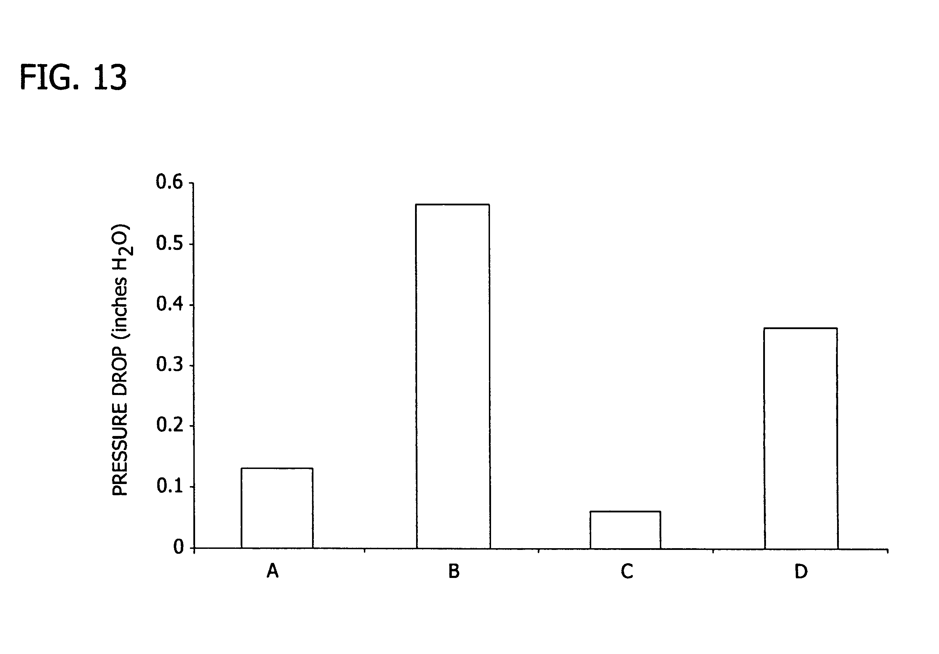

Flat sheets of base media substrate 12, and base media substrate 12 including nanofiber layer 20 were compared to a comparative base media substrate with and without a nanofiber layer in a flat sheet pressure drop test in accordance ASHRAE 52.2-1999 test method. Air containing KCl particles was directed through each test sample at a flow rate of about 0.05 m/s (10 ft/min.) FIG. 13 shows a graphical representation of the comparison test. Bar A represents a comparative base media substrate and bar B represents the comparative base media substrate including a nanofiber layer. Bar C represents base media substrate 12 at 150g/m$^2$, and bar D represents base media substrate 12 at 150g/m$^2$, including nanofiber layer 20. Base media substrate 12 with and without nanofiber layer 20 had a lower pressure drop than the comparative base substrate with and without a nanofiber layer.

Corrugated strips of composite filter media 10, including nanofiber layer 20, were pleated and compared to a comparative known filter media with a nanofiber layer for differential pressure over time by using a modified ASTM D-6830-02 test method. The test method tested the filter media under simulated conditions found in full size dust collectors. Standardized dust was drawn from a slip stream at a controlled volume (constant air to media ratio) through the test media, and pressure drop versus time was recorded. Reverse pulse-jet cleaning, at specified intervals, back-flushed the filter media to purge collected dust. The modifications to ASTM D-6830-02 were as follows

The dust feed was set at 100 grams/hour, which resulted in a filter dust load of approximately 0.5g/m$^3$. In place of the fabric clamping ring, an adapter plate for pleated filter cassettes with a test cassette was mounted in place in the filter holding nozzle assembly of the cylindrical extraction tube. The raw gas airflow was set at 10 m$^3$/hr. The filter cassette module flow was set at 4.65 m$^3$/hour. Each filter cassette contained a nominal 0.085 m$^2$ (0.91 ft$^2$) of filter media using a standard 48 mm high pleat (unless otherwise indicated). The exposed pleat pack consisted of 11 full pleats, 3 inches long. The flow setting resulted in an apparent face velocity of 0.02 cm/s (3.0 fpm). Pulse air was set at 0.5 kPa (75 psig). Pulse cleaning started 15 minutes after start of the test. Cleaning intervals were based on time intervals of 900 seconds. The test dust was aluminum oxide having an average particle size of about 1.5 micron, Pural NF, commercially available from Condea Chemie GmbH. Total elapsed test time was 10 hours. No filter conditioning period was used.

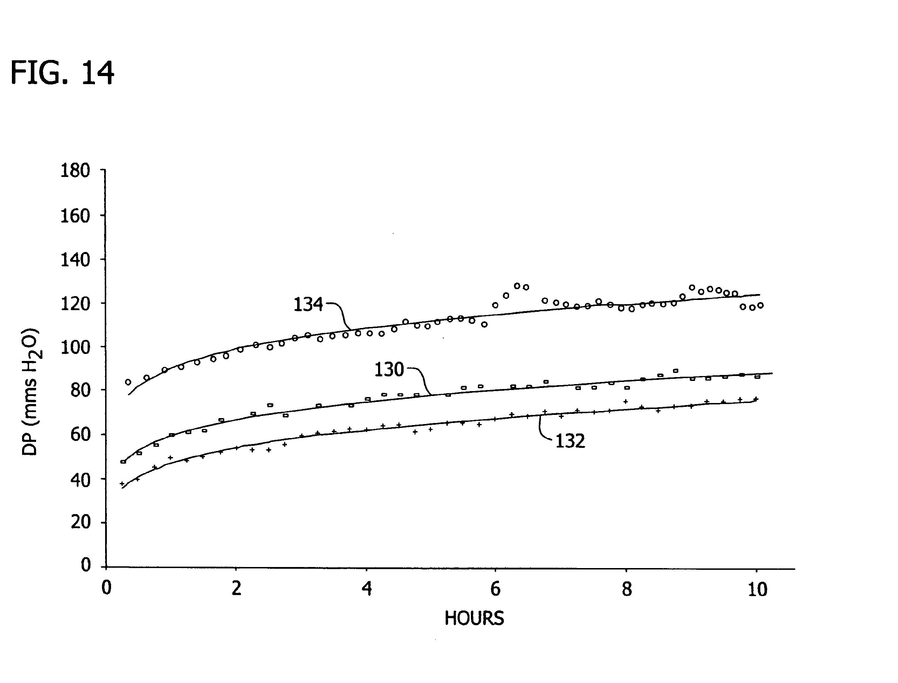

FIG. 14 shows a graphical representation of the comparison test. Line 130 represents composite filter media 10 having a 48 mm pleat height, line 132 represents filter composite media 10 having a 42 mm pleat height, and line 134 represents a known comparative filter media. Filter media 10 test samples having either 42 mm or 48 mm pleat hight had significantly a lower differential pressure over the length of the 10 hour test.

The above described filter elements 70 formed from filter media 10 can be used for filtering an air stream in almost any application, for example, for filtering gas turbine inlet air. The unique construction of filter media 12 is more durable than known filter media and provides for lower pressure drop build-up because of less deflection from the forces exerted on the filter media during the filtering and reverse cleaning operations due to the corrugation construction. Filter elements 70 have produced an average efficiency greater than about 75% capture of the most penetrating particle size of aerosol or dust (about 0.3 to about 0.4 micron) as compared to about 50-55% of known filter elements. Also, nanofiber layer 20 has a higher basis weight than known filter media which permits filter media 12 to clean down more effectively under reverse pulse cleaning than known filter media. Further, the high basis weight of nanofiber layer 20 provides for a durable three dimensional surface filtration layer which has an extensive tortuous path that permits high efficiency and fine particle capture without restricting air flow or increasing pressure drop.

The example filter media of Examples 1-2 and Comparative Examples 3-7 illustrate a comparison of embodiments of filter media 10 with known filter media. Efficiency, resistance and quality factor were measured for each filter media of Examples 1-2 and Comparative Examples 3-7. Efficiency was measured in accordance with ASHRAE 52.2-1999 test procedure, resistance was measured in accordance with EN-1822 (1998), and quality factor $Q_f$ was calculated as described above.

Example 1 is a spunbond polyester bicomponent fiber base media substrate, and Example 2 is the base media substrate of Example 1 plus a 2 g/m$^2$ nanofiber layer formed by an electro-blown spinning process. Comparative Example 3 is a known drylaid polyester base media substrate, and Comparative Example 4 is the known drylaid polyester base media substrate of Comparative Example 3 plus a 2 g/m$^2$ nanofiber layer. Comparative Example 5 is a wet-laid synthetic paper plus a <0.5 g/m$^2$ nanofiber layer. Comparative Example 6 is a wet-laid synthetic paper, and Comparative Example 7 is the wet-laid synthetic paper of Example 6 plus a 20 g/m$^2$ meltblown fiber layer. The example results are shown in Table I below. When Example 2 is compared to composites in Comparative Examples 4, 5, and 7 efficiency is not sacrificed at the expense of reducing resistance which yields the associated high Quality Factor values.

TABLE I

| Example | Basis Weight (g/m$^2$) | Efficiency (%) | Resistance (mm H$_2$O) | Quality Factor |
|---|---|---|---|---|
| Example 1 Spunbond Polyester Bicomponent Fiber Base | 158.6 | 57.0 | 1.78 | 525 |
| Example 2 Spunbond Polyester Bicomponent Fiber Base + 2 g/m$^2$ Nanofiber Layer | 154.6 | 80.2 | 3.43 | 534 |
| Comparative Example 3 Drylaid Polyester Base | 234.9 | 28.7 | 9.3 | 40 |
| Comparative Example 4 Drylaid Polyester Base + 2 g/m$^2$ Nanofiber Layer | 236.3 | 43.2 | 13.81 | 45 |
| Comparative Example 5 Wet laid Synthetic Paper + <0.5 g/m$^2$ Nanofiber Layer | 121.2 | 40.5 | 9.77 | 59 |
| Comparative Example 6 Wetlaid Synthetic Paper | 133.4 | 9.0 | 7.67 | 14 |
| Comparative Example 7 | 150.2 | 86.4 | 8.79 | 251 |

(continued)

| Example | Basis Weight (g/m$^2$) | Efficiency (%) | Resistance (mm H$_2$O) | Quality Factor |
|---|---|---|---|---|
| Wetlaid Synthetic Paper + 20 g/m$^2$ Meltblown Fiber Layer | | | | |
| Efficiency measured at 0.3 microns, 5.3 cm/s face velocity (ASHRAE 52.2-1999). Resistance measured in accordance with EN-1822 (1998). Quality Factor defined by the equation: $Q_f = -25000 \cdot \log(P/100)/\Delta p$ | | | | |

This written description uses examples to disclose the invention, including the preferred mode, and also to enable any person skilled in the art to practice the invention, including making and using any devices or systems and performing any incorporated methods.

**Claims**

1. A method of making a composite filter media (10), said method comprising:

   forming a nonwoven fabric substrate (12) comprising a plurality of bicomponent synthetic fibers (30) by a spunbond process;
   calendering the nonwoven fabric substrate (12) with embossing calender rolls to form a bond area pattern comprising a plurality of substantially parallel discontinuous lines of bond area (35) to bond the synthetic bicomponent fibers together to form a nonwoven fabric, wherein the bond area of the bicomponent fibers is about 10% to about 14% of the total area of the nonwoven fabric, the nonwoven fabric having a filtration efficiency of at least about 50%, measured in accordance with ASHRAE 52.2-1999 test procedure;
   applying a nanofiber layer (20) by electro-blown spinning a polymer solution to form a plurality of nanofibers on at least one side of the nonwoven fabric to form the composite filter media, the composite filter media having a filtration efficiency of at least about 75%, measured in accordance with ASHRAE 52.2-1999 test procedure; and
   corrugating the composite filter media (10) using opposing corrugating rollers (40) at a temperature of about 90°C to about 140°C.

2. A method in accordance with Claim 1 wherein the plurality of bicomponent fibers (30) comprise a core material (32) and a sheath material (34), the sheath material having a lower melting point than the core material.

3. A method in accordance with any preceding Claim wherein applying a nanofiber layer (20) by electro-blown spinning a polymer solution comprises applying a vacuum to the nonwoven fabric substrate (12) while applying the nanofiber layer to the nonwoven fabric substrate.

4. A method in accordance with any preceding Claim wherein the core (32) of the synthetic bicomponent fibers (30) comprise at least one of polyester fibers, polyamid fibers, polyolefin fibers, thermoplastic polyurethane fibers, polyetherimide fibers, polyphenyl ether fibers, polyphenylene sulfide fibers, polysulfone fibers, and aramid fibers.

5. A method in accordance with any preceding Claim wherein forming a nonwoven fabric substrate (12) comprises forming a nonwoven fabric substrate having a basis weight of about 100 g/m$^2$ to about 300 g/m$^2$.

6. A method in accordance with any preceding Claim wherein forming a nonwoven fabric substrate (12) comprises forming a nonwoven fabric substrate having bicomponent fibers with an average diameter of about 12 to about 18 microns.

7. A method in accordance with any preceding Claim wherein the nanofiber layer (20) comprises a plurality of nanofibers having an average diameter of about 500 nm or less, the nanofiber layer having a basis weight of about 0.6 g/m$^2$ to about 20 g/m$^2$.

8. A method in accordance with any preceding Claim wherein corrugating the composite filter media (10) comprises corrugating the composite filter media so that the corrugations comprise a plurality of alternating peaks and valleys extending a length of the composite filter media.

9. A method in accordance with any preceding Claim wherein corrugating the composite filter media (10) comprises corrugating the composite filter media so that the corrugations comprise alternating up and down substantially V-shaped corrugations.

10. A method in accordance with any preceding Claim wherein corrugating the composite filter media (10) comprises corrugating the composite filter media with a corrugation pitch of about 3 to about 10 corrugations per inch and an effective depth of at least about 0.0508 cm (0.02 inch).

**Patentansprüche**

1. Ein Verfahren zur Herstellung eines Verbundfiltermediums (10), wobei das Verfahren umfasst:

Bilden eines Vliesstoffsubstrats (12), das eine Mehrzahl von synthetischen Bikomponentfasern (30) umfasst, durch einen SpunbondProzess;
Kalandrieren des Vliesstoffsubstrats (12) mit Prägekalandarwalzen, um eine Bindeflächenstruktur zu bilden, umfassend eine Mehrzahl von im Wesentlichen parallelen nicht-durchgehenden Zeilen einer Bindefläche (35), um die synthetischen Bikomponentfasern aneinanderzubinden, um einen Vliesstoff zu bilden, wobei die Bindefläche der Bikomponentfasern ungefähr 10 % bis ungefähr 14 % der Gesamtfläche des Vliesstoffes ausmacht, wobei der Vliesstoff laut Messung gemäß dem Testverfahren ASHRAE 52.2-1999 eine Filtrationseffizienz von zumindest ungefähr 50 % aufweist;
Auftragen einer Nanofaserschicht (20) durch Elektroblasspinnen einer Polymerlösung, um eine Mehrzahl von Nanofasern auf zumindest einer Seite des Vliesstoffes zu bilden, um das Verbundfiltermedium zu bilden, wobei das Verbundfiltermedium laut Messung gemäß dem Testverfahren ASHRAE 52.2-1999 eine Filtrationseffizienz von zumindest ungefähr 75 % aufweist; und
Riffeln des Verbundfiltermediums (10) unter Verwendung von gegenüberliegenden Riffelwalzen (40) bei einer Temperatur von ungefähr 90 °C bis ungefähr 140 °C.

2. Ein Verfahren gemäß Anspruch 1, wobei die Mehrzahl von Bikomponentfasern (30) ein Kernmaterial (32) und ein Mantelmaterial (34) umfasst, wobei das Mantelmaterial einen niedrigeren Schmelzpunkt als das Kernmaterial aufweist.

3. Ein Verfahren nach einem der vorhergehenden Ansprüche, wobei das Auftragen einer Nanofaserschicht (20) durch Elektroblasspinnen einer Polymerlösung das Anlegen von Vakuum auf das Vliesstoffsubstrat (12) umfasst, während die Nanofaserschicht auf das Vliesstoffsubstrat aufgetragen wird.

4. Ein Verfahren nach einem der vorhergehenden Ansprüche, wobei der Kern (32) der synthetischen Bikomponentfasern (30) zumindest eines von Polyesterfasern, Polyamidfasern, Polyolefinfasern, thermoplastischen Polyurethanfasern, Polyetherimidfasern, Polyphenyletherfasern, Polyphenylensulfidfasern, Polysulfonfasern und Aramidfasern umfasst.

5. Ein Verfahren nach irgendeinem der vorhergehenden Ansprüche, wobei das Bilden eines Vliesstoffsubstrats (12) das Bilden eines Vliesstoffsubstrats mit einem Basisgewicht von ungefähr100 g/m$^2$ bis ungefähr 300 g/m$^2$ umfasst.

6. Ein Verfahren nach irgendeinem der vorhergehenden Ansprüche, wobei das Bilden eines Vliesstoffsubstrats (12) das Bilden eines Vliesstoffsubstrats mit Bikomponentfasern mit einem durchschnittlichen Durchmesser von ungefähr 12 bis ungefähr 18 Mikrometern umfasst.

7. Ein Verfahren nach irgendeinem der vorhergehenden Ansprüche, wobei die Nanofaserschicht (20) eine Mehrzahl von Nanofasern mit einem durchschnittlichen Durchmesser von ungefähr 500 nm oder weniger umfasst, wobei die Nanofaserschicht ein Basisgewicht von ungefähr 0,6 g/m$^2$ bis ungefähr 20 g/m$^2$ aufweist.

8. Ein Verfahren nach irgendeinem der vorhergehenden Ansprüche, wobei das Riffeln des Verbundfiltermediums (10) das Riffeln des Verbundfiltermediums umfasst, so dass die Riffeln eine Mehrzahl von abwechselnden Spitzen und Tälern umfassen, die sich über eine Länge des Verbundfiltermediums erstrecken.

9. Ein Verfahren nach irgendeinem der vorhergehenden Ansprüche, wobei das Riffeln des Verbundfiltermediums (10) das Riffeln des Verbundfiltermediums umfasst, so dass die Riffeln abwechselnde im Wesentlichen V-förmige Rippen und Rillen umfassen.

10. Ein Verfahren nach irgendeinem der vorhergehenden Ansprüche, wobei das Riffeln des Verbundfiltermediums (10) das Riffeln des Verbundfiltermediums mit einer Riffelverteilung von ungefähr 3 bis ungefähr 10 Riffeln pro Zoll und einer effektiven Tiefe von zumindest ungefähr 0,0508 cm (0,02 Zoll) umfasst.

## Revendications

1. Procédé de fabrication d'un matériau filtrant composite (10), ledit procédé comprenant :

la formation d'un substrat de nontissé (12) comprenant une pluralité de fibres synthétiques bicomposantes (30) par un procédé de filage-liage ;

le calandrage du substrat de nontissé (12) avec des rouleaux de calandre à gaufrer pour former un motif à surfaces d'adhésion comprenant une pluralité de lignes de surface d'adhésion (35) discontinues essentiellement parallèles pour relier les fibres synthétiques bicomposantes pour former un nontissé, dans lequel la surface d'adhésion des fibres bicomposantes est d'environ 10 % à environ 14 % de la surface totale du nontissé, le nontissé ayant une efficacité de filtration d'au moins environ 50 %, mesurée conformément à la procédure d'essai ASHRAE 52.2-1999 ;

l'application d'une couche de nanofibres (20) par filage par électro-soufflage d'une solution de polymère pour former une pluralité de nanofibres au moins d'un côté du nontissé pour former le matériau filtrant composite, le matériau filtrant composite ayant une efficacité de filtration d'au moins environ 75 %, mesurée conformément à la procédure d'essai ASHRAE 52.2-1999 ; et

le formage d'ondulations sur le matériau filtrant composite (10) à l'aide de cylindres onduleurs (40) opposés à une température d'environ 90 °C à environ 140 °C.

2. Procédé selon la revendication 1 dans lequel la pluralité de fibres bicomposantes (30) comprend un matériau d'âme (32) et un matériau de gaine (34), le matériau de gaine ayant un point de fusion inférieur au matériau d'âme.

3. Procédé selon l'une quelconque des revendications précédentes dans lequel l'application d'une couche de nanofibres (20) par filage par électro-soufflage d'une solution de polymère comprend l'application d'un vide au substrat de nontissé (12) pendant l'application de la couche de nanofibres sur le substrat de nontissé.

4. Procédé selon l'une quelconque des revendications précédentes dans lequel l'âme (32) des fibres synthétiques bicomposantes (30) comprend au moins l'une de fibres en polyester, fibres en polyamide, fibres en polyoléfine, fibres en polyuréthane thermoplastique, fibres en polyétherimide, fibres en éther polyphénylique, fibres en sulfure de polyphénylène, fibres en polysulfone et fibres en aramide.

5. Procédé selon l'une quelconque des revendications précédentes dans lequel la formation d'un substrat de nontissé (12) comprend la formation d'un substrat de nontissé ayant un poids de base d'environ 100 g/m$^2$ à environ 300 g/m$^2$.

6. Procédé selon l'une quelconque des revendications précédentes dans lequel la formation d'un substrat de nontissé (12) comprend la formation d'un substrat de nontissé ayant des fibres bicomposantes d'un diamètre moyen d'environ 12 à environ 18 microns.

7. Procédé selon l'une quelconque des revendications précédentes dans lequel la couche de nanofibres (20) comprend une pluralité de nanofibres ayant un diamètre moyen d'environ 500 nm ou moins, la couche de nanofibres ayant un poids de base d'environ 0,6 g/m$^2$ à environ 20 g/m$^2$.

8. Procédé selon l'une quelconque des revendications précédentes dans lequel le formage d'ondulations sur le matériau filtrant composite (10) comprend le formage d'ondulations sur le matériau filtrant composite de manière à ce que les ondulations comprennent une pluralité de crêtes et de creux alternés s'étendant sur une longueur du matériau filtrant composite.

9. Procédé selon l'une quelconque des revendications précédentes dans lequel le formage d'ondulations sur le matériau filtrant composite (10) comprend le formage d'ondulations sur le matériau filtrant composite de manière à ce que les ondulations comprennent des ondulations essentiellement en forme de V en alternance vers le haut et vers le bas.

**10.** Procédé selon l'une quelconque des revendications précédentes dans lequel le formage d'ondulations sur le matériau filtrant composite (10) comprend le formage d'ondulations sur le matériau filtrant composite avec un pas d'ondulation d'environ 3 à environ 10 ondulations par pouce et une profondeur effective d'au moins environ 0,0508 cm (0,02 pouce).

EP 2 161 066 B1

# FIG. 1

# FIG. 5

12

## FIG. 2

## FIG. 3

FIG. 4

FIG. 6

# FIG. 7

# FIG. 8

FIG. 9

EP 2 161 066 B1

FIG. 10

# FIG. 11

FIG. 12

FRACTIONAL EFFICIENCY %

120  100  80  60  40  20  0

PARTICLE SIZE (microns)

0.35  0.47  0.62  0.84  1.14  1.44  1.88  2.57  3.46  4.69  6.2  8.37

122  126  120  124

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060137317 A
- US 20080113573 A
- US 20050067732 A